# EUROPÄISCHE PATENTSCHRIFT

(11) **EP 2 411 257 B1**
(45) Veröffentlichungstag und Bekanntmachung des Hinweises auf die Patenterteilung: **04.12.2013**
(21) Anmeldenummer: 10709562.2
(22) Anmeldetag: 22.03.2010
(51) Int. Cl.: B62D 5/22

(54) **ZAHNSTANGENGEHÄUSE MIT QUERSCHNITTSVERENGUNGEN**
STEERING RACK HOUSING COMPRISING CROSS-SECTIONAL CONTRACTIONS
BOÎTIER DE CRÉMAILLÈRE AVEC RÉTRÉCISSEMENTS DE SECTION

(30) Priorität: 24.03.2009 DE 102009001805
(43) Veröffentlichungstag der Anmeldung: 01.02.2012
(73) Patentinhaber: Ford Global Technologies, LLC, Dearborn, MI 48126 (US)
(72) Erfinder: HEIN, Paul, 42653 Solingen (DE); KOGAN, Alexander, 51105 Köln (DE); KELLER, Jens, 42655 Solingen (DE)
(74) Vertreter: Bauer Vorberg Kayser Patentanwälte
(86) Internationale Anmeldenummer: PCT/EP2010/053711
(87) Internationale Veröffentlichungsnummer: WO 2010/108891

(56) Entgegenhaltungen:
- EP-A1- 1 757 512
- EP-A2- 0 147 069
- WO-A1-03/029067
- DE-A1- 4 220 415

## Beschreibung

Die Erfindung betrifft ein Zahnstangengehäuse für eine Servolenkung, welches eine Zahnstange rohrartig umgibt und mindestens einen hydraulischen Bereich und einen mechanischen Bereich sowie ein inneres Stützlager aufweist.

Zahnstangenlenkungen werden bei Kraftfahrzeugen eingesetzt, um die über das Lenkrad aufgebrachte drehende Lenkbewegung in eine geradlinige Bewegung zum Verschwenken der zu lenkenden Fährzeugräder umzuwandeln. Zur Lenkkraftunterstützung kommt hierbei ein Servoantrieb zum Einsatz, der an geeigneten Stellen innerhalb des Lenkkraftflusses angeordnet werden kann.

Bei der Zahnstangenlenkung ist das Ende der Lenksäule mit einem Ritzel verbunden, welches in die Zahnstange eingreift und diese beim Drehen der Lenkung seitlich verschiebt. An beiden Enden der Zahnstange ist jeweils eine Spurstange über ein Kugelgelenk angeschlossen. Der äußerst geringe Verschleiß hat für die große Verbreitung der Zahnstangenlenkung gesorgt. Zahnstangenlenkungen haben eine gute Rückmeldung und ein sehr gutes Rückstellvermögen.

Üblicherweise bestehen Zahnstangengehäuse aus Aluminium und werden im Druckgussverfahren hergestellt. Nach dem Gießen ist eine spannende Bearbeitung erforderlich, um beispielsweise die Ritzeleinheit am Zahnstangengehäuse montieren zu können, auch werden Anlageflächen für die zu montierenden Teile gefräst. Weiterhin werden Grund- und Durchgangsbohrungen zur Befestigung angefertigt.

Bekannt sind aber auch Zahnstangengehäuse, die aus Stahl gefertigt sind. Im Vergleich zu üblichen Aluminium-Lenkgehäusen weisen Ganzstahlgehäuse eine Reihe von Vorteilen auf, darunter eine höhere Steifigkeit und Zähigkeit des Werkstoffs. Die gefühlte Lenkungs-Präzision wird durch das steifere Stahlgehäuse merklich erhöht. Ebenso von Vorteil ist die kompakte und kostengünstige hydraulische Leitungsführung des Stahlgehäuses, bei der die Verschraubungsschnittstellen entfallen. Das an verschiedene Fahrzeugtypen flexibel anpassbare Gehäuse wird als Schweißkonstruktion aus umgeformten, vorkonfektionierten Präzisionsstahlrohren mit Festigkeiten je nach Umformgrad von 450 bis 650 N/mm² gefertigt. Den Korrosionsschutz gewährleistet ein spezieller galvanischer Überzug. Die angeschweißten hydraulischen Versorgungsleitungen ermöglichen eine optimale Bauraumanpassung im Fahrzeug.

Zahnstangengehäuse weisen einen mechanischen Bereich und einen hydraulischen Bereich auf. Der mechanische Bereich ist derjenige Bereich, in dem sich der Bereich der Zahnstange bewegt, der mit Zähnen versehen ist und der mit dem Ritzel in Eingriff kommt. Der Ritzeleingriffsbereich befindet sich also im mechanischen Bereich des Zahnstangengehäuses. Der hydraulische Bereich dagegen ist derjenige Bereich, in den die Zahnstange ebenfalls hineinreicht, aber üblicherweise keine Verzahnung aufweist. Innerhalb des hydraulischen Bereichs ist die Zahnstange mit einem verschieblich gelagerten Kolbenelement verbunden, an dessen Stirnseiten je eine Zylinderkammer ausgebildet ist. Bei Verdrehung des Lenkrads des Fahrzeugs wird ein Steuerventil betätigt, so dass Drucköl in jeweils eine der Zylinderkammern einströmt, wodurch sich der Kolben und somit die Zahnstange im Zylinder verschiebt. Die Verschiebung des Kolbens aufgrund des Drucköls dient als Kraftverstärkung für die Zahnstangenbewegung. Zu diesem Zweck sind das Steuerventil und das Zahnstangengehäuse über Hydraulikleitungen miteinander verbunden, so dass je nach Drehrichtung des Lenkrads die eine oder andere Zylinderkammer mit Drucköl gefüllt oder entleert werden kann.

Zwischen dem mechanischen Bereich und dem hydraulischen Bereich ist üblicherweise ein Stützring angeordnet, der die hydraulischen inneren Kräfte in das Zahnstangengehäuse ableitet und in der Regel auch ein Dichtungselement, beispielsweise einen O-Ring, hält. Um dem Stützlager eine Krafteinleitungsstelle zu bieten, weist das Zahnstangengehäuse in diesem Bereich eine umlaufende Einschnürung auf, die einen Formschluss mit dem Stützring ermöglicht. Die Fertigung der Einschnürung ist mit einem relativ hohem Aufwand und entsprechend hohen Kosten verbunden.

Die DE 42 20 415 A1 offenbart ein Verfahren zur Befestigung eines Stützringes gemäß dem Oberbegriff des Anspruchs 1.

Die Aufgabe der vorliegenden Erfindung besteht darin, den Herstellungsaufwand und die Kosten für ein Zahnstangengehäuse zu reduzieren und dabei trotzdem den hohen Anforderungen an die Qualität und Güte gerecht zu werden. Erfindungsgemäß wird die Aufgabe durch ein Verfahren zur Befestigung eines Stützringes in einem Zahnstangengehäuse gemäß Anspruch 1 gelöst.

Die Herstellung eines solchen Zahnstangengehäuses bzw. die Befestigung des Stützlagers innerhalb des Zahnstangengehäuses ist schnell und einfach durchzuführen. Es ist erfindungsgemäß nicht notwendig, dass gesamte Zahnstangengehäuse umlaufend im Durchmesser zu verringern, es reichen zwei einander möglichst diametral gegenüberliegende Querschnittsverengungen aus. Zu diesem Zweck wird der Stützring bei der Befestigung innerhalb des Zahnstangengehäuses zunächst an seine Funktionsposition gebracht, anschließend wird mit einem entsprechenden Werkzeug der Querschnitt des Zahnstangengehäuses von Außen verändert. In einem besonders vorteilhaften Verfahren reicht es beispielsweise aus, lediglich zwei Einstanzungen von Außen vorzunehmen. Um die Befestigung weiter zu verbessern, können aber auch drei oder mehr gleichmäßig über den Außenumfang des Zahnstangengehäuses verteilte Querschnittsverengungen eingebracht werden.

Die Querschnittsverengungen werden ausgeführt, dass sie eine Befestigung des Stützrings mittels Formschluss bewirken. Formschluss kann beispielsweise dann erreicht werden, wenn die Querschnittsverengungen in Vertiefungen auf der Außenseite des Stützlagers, also derjenigen Seite, die mit der Innenseite des Zahnstangengehäuses in Kontakt kommt, hineinreichen. Das Stützlager kann zu diesem Zweck bereits mit entsprechenden Vertiefungen ausgeführt sein, in die bei der Änderung des Querschnitts die Querschnittsverengungen hineingedrückt werden. Erfindungsgemäß reicht die Kraft zur Einbringung der Querschnittsverengungen aus, um sowohl das Zahnstangengehäuse als auch die Außenfläche des Stützlagers zu verändern bzw. einzudrücken. Beispielsweise können zwei oder mehr Dornen unter hohem Druck in die Außenfläche des Zahnstangengehäuses eingedrückt werden, so dass nicht nur das Zahnstangengehäuse selbst, sondern auch das Stützlager eingedrückt wird. Dieses Verfahren hat den Vorteil, dass eine genaue Positionierung des Stützlagers bzw. der Vertiefungen innerhalb des Stützlagers entfallen kann.

Das Zahnstangengehäuse für eine Lenkung weist im Allgemeinen einen geradlinigen, zwei Öffnungen im Zahnstangengehäuse definierenden Durchbruch zur Aufnahme und verschiebbaren Lagerung einer den Durchbruch durchgreifenden Zahnstange auf. Gemäß einer weiteren Ausgestaltung ist wenigstens ein gehäuseseitig vorgesehener Anschlag zur Verschiebewegbegrenzung der Zahnstange vorgesehen.

Anschlag ist weit auszulegen. Beispielsweise kann der Anschlag unmittelbar mit der Zahnstange, beispielsweise mit einer daran vorgesehenen Verdickung, zusammenwirken und deren Verschiebung in eine Richtung begrenzen. Bevorzugt ist der Anschlag so ausgelegt, dass bei der Verschiebebewegung der Zahnstange beim Lenken ein Gelenkteil des die Zahnstange mit der Spurstange verbindenden Gelenks, beispielsweise Kugelgelenks, an den Anschlag anschlägt um so die Verschiebebewegung der Zahnstange zu begrenzen.

Eine bevorzugte Ausgestaltung des Zahnstangengehäuses zeichnet sich dadurch aus, dass der Anschlag durch ein in den Durchbruch eingesetztes, aus Stahlblech hergestelltes Anschlagsteil bereitgestellt wird oder dass der Anschlag am Zahnstangengehäuse ausgebildet ist. Dadurch kann ein herkömmlicher Anschlagring vorteilhaft entfallen. Dies spart Gewicht und reduziert nicht nur die Transportkosten der Zahnstangenlenkung sondern verringert auch das Gewicht des betreffenden Fahrzeugs und verbessert somit dessen Energlebilanz. Zudem ist die Herstellung des Anschlagsteils durch Stahlblech beziehungsweise das Ausbilden des Anschlags am Gehäuse vergleichsweise einfach und kann in wenigen Arbeitsschritten erfolgen, was die Herstellungskosten verringert. Das aus Stahlblech hergestellte Anschlagsteil kann zudem vergleichsweise einfach mit dem Gehäuse durch Widerstandsschweißen verbunden werden, was die thermisch Beanspruchung und damit die Gefahr von Verzug verringert. Der Anschlag oder das Anschlagsteil sind nicht auf die Anschlagsfunktion eingeschränkt und können auch zusätzlich der Abstützung und Führung der Zahnstange dienen.

Bevorzugt wird durch eine Querschnittsverringerung des Durchbruchs des Zahnstangengehäuses der Anschlag definiert, oder das Anschlagsteil definiert eine Querschnittsverringerung.

Bei einer besonders einfachen Variante des durch das Zahnstangengehäuse ausgebildeten Anschlags wird der Anschlag dadurch gebildet, dass der Durchbruch bzw. dessen Querschnitt über die gesamte Durchbruchslänge so eng bemessen ist, dass es am Rand des Durchbruchs zum Anschlag mit der Zahnstange oder mit dem Gelenk zwischen Zahnstange und Spurstange kommt. Das Zahnstangengehäuse bedarf bei dieser Ausgestaltung vorteilhaft keiner weiteren Bearbeitung zur Herstellung des Anschlags.

Bei einer weiteren Ausgestaltung wird der Anschlag oder das Anschlagsteil durch eine zur Längsachse des Durchbruchs symmetrische Querschnittsverringerung des Durchbruchs des Zahnstangengehäuses definiert. Dadurch kann sicher der Anschlag und vor Allem ohne die Notwendigkeit, bei der Montage eine Montagerichtung beachten zu müssen, der Anschlag bereitgestellt werden.

Bei einer weiteren Ausgestaltung ist der Anschlag oder das Anschlagsteil im Bereich der Öffnung des Durchbruches des Zahnstangengehäuses angeordnet. D.h. der Anschlag oder das Anschlagsteil ist an einem der beiden oder an beiden Öffnungsbereichen des Zahnstangengehäuses angeordnet. Im Allgemeinen weist eine Zahnstangengehäuse ein zum hydraulischen Bereich nächst benachbarten Öffnungsbereich und einen zum mechanischen Bereich nächst benachbarten Öffnungsbereich auf. Beispielsweise ist der Anschlag oder das Anschlagsteil wenigstens an dem zum mechanischen Bereich nächst benachbarten Öffnungsbereich, also an dem Zahnstangegehäuse geringerer Güte, angeordnet.

Das Anschlagsteil aus Stahlblech wird in einer Ausgestaltung vergleichsweise einfach durch Blechumformen hergestellt. Bevorzugt wird das Anschlagsteil durch ein Tiefziehverfahren hergestellt. Zur Vermeidung einer bei der Montage nachteilig zu beachtenden Vorzugsrichtung ist das Anschlagsteil rotationssymmetrisch ausgebildet. Dadurch werden Montagefehler vermieden. Bevorzugt ist das Anschlagsteil aus einem Stahlblech geringer Güte hergestellt. Geringe Güte im Sinne meint beispielsweise eine Güte, die geringer als die Güte des Stahls des wenigstens einen, den Durchbruch definierenden Stahlrohrs ist.

Das Anschlagsteil wird in einer Ausgestaltung schlüssig mit dem Zahnstangengehäuse verbunden, beispielsweise durch Einpressen oder gegen eine Anlage, dann besteht Formschluss.

Gemäß einer weiteren vorteilhaften Ausgestaltung ist das Anschlagsteil napfförmig und ist mit einem zentralen Durchgang für die Zahnstange ausgebildet.

Bei einer weiteren Ausgestaltung wird der durch das Gehäuse ausgebildete Anschlag durch Kaltumformen, wie Stanzen, des Zahnstangengehäuses ausgebildet.

Gemäß einer weiteren Ausgestaltung weist das Zahnstangengehäuse im Bereich der Öffnung einen nach außen sich aufweitenden, d.h. tulpenförmigen, Fortsatz zur Befestigung einer Manschette, beispielsweise einer Gelenkmanschette aus Gummi, auf. Bevorzugt handelt es sich bei dem Fortsatz um ein Tiefziehteil, das beispielsweise mit dem Stahlrohr verschweißt wird. In einer Ausgestaltung wird der Anschlag durch den tulpenförmigen Fortsatz gebildet.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1:: Ein Zahnstangengehäuse mit dazugehörigen Komponenten in perspektivischer Darstellung von außen,
- Fig. 2:: das Zahnstangengehäuse im Schnitt,
- Fig. 3:: einen Bereich des Zahnstangengehäuses,
- Fig. 4:: ein zum mechanischen Bereich benachbartes Ende einer Ausgestaltung eines nicht erfindungsgemäßen Zahnstangengehäuses im Schnitt,
- Fig. 5:: ein zum mechanischen Bereich benachbartes Ende eines nicht erfindungsgemäßen Zahnstangengehäuses in alternativer Ausgestaltung im Schnitt,
- Fig. 6:: ein zum mechanischen Bereich benachbartes Ende eines nicht erfindungsgemäßen Zahnstangengehäuses in einer weiteren alternativer Ausgestaltung im Schnitt.

Ein erfindungsgemäßes Zahnstangengehäuse 20 ist im Wesentlichen zylinderförmig ausgeführt. Innerhalb des Zahnstangengehäuses 20 befindet sich eine nicht dargestellte Zahnstange. Die Zahnstange wird über ein mit der Lenksäule verbundenes Ritzel bewegt. Dieses ebenfalls nicht dargestellte Ritzel ist in einem Turmrohr 22 angeordnet. Sowohl das Zahnstangengehäuse 20 als auch das Turmrohr 22 weisen zu diesem Zweck Öffnungen auf, die im montierten Zustand in Deckung gebracht sind und einen Ritzeleingriffsbereich ausbilden.

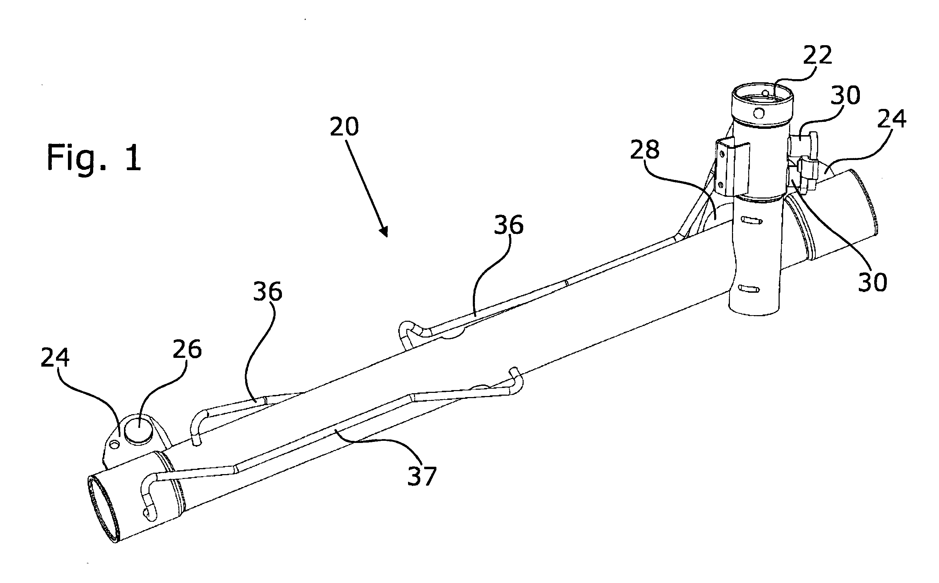

Fig. 1 zeigt weiterhin, dass das Zahnstangengehäuse 20 zur Befestigung Halterungen 24 aufweist, die jeweils im Wesentlichen endseitig angeordnet sind und Befestigungsöffnungen 26 aufweisen.

Auf der dem Turmrohr 22 gegenüberliegenden Seite des Zahnstangengehäuses 20 ist ein Gleitsteinrohr 28 angeordnet, in dem ein ebenfalls nicht erkennbarer Gleitstein untergebracht ist. Das Turmrohr 22 weist im gezeigten Ausschuss Beispiel zwei Versorgungsanschlüsse 30 auf.

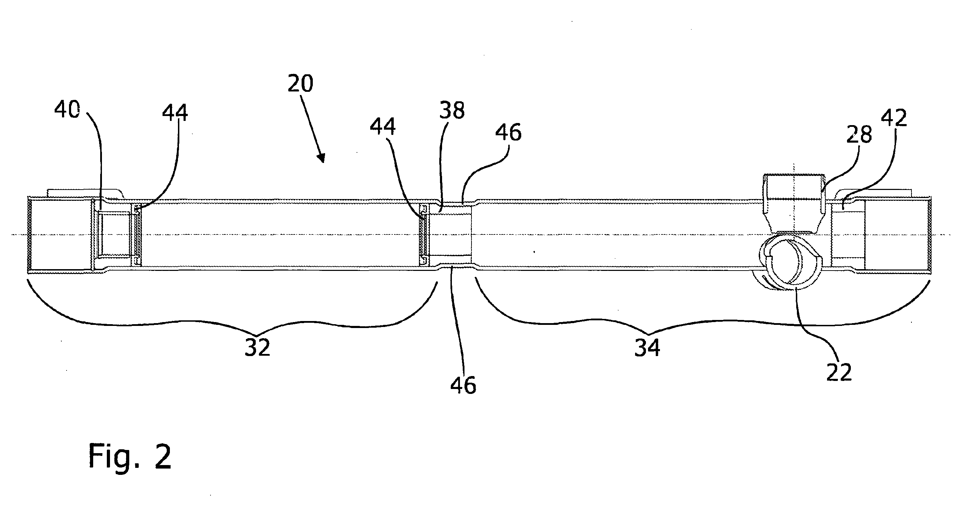

Das Turmrohr ist zusätzlich über Ölleitungen 36 mit dem Zahnstangengehäuse 20 verbunden. Das Zahnstangengehäuse 20 weist zwei Bereiche auf, einen hydraulischen Bereich 32 und einen mechanischen Bereich 34 (vgl. auch Fig. 2). Weiterhin ist eine Entlüftungsleitung 37 gezeigt, die die beiden Zahnsstangengehäusebereiche 32, 34 verbindet. Der Ritzeleingriffsbereich befindet sich im mechanischen Bereich 34, in dem die Zahnstange eine Verzahnung aufweist. Im hydraulischen Bereich 32 weist die Zahnstange keine Verzahnung auf, sondern ist mit einem verschieblich gelagerten Kolbenelement verbunden. Der Kolben unterteilt den hydraulischen Bereich 32 in zwei Zylinderkammern, an die jeweils eine Ölleitung 36 angeschlossen ist. Die Ölleitungen 36 sind über das Turmrohr 22 mit einem nicht gezeigten Steuerventil verbunden, so dass über entsprechenden Öldruck in den Zylinderkammern der Kolben in die gewünschte Richtung verschoben wird und somit eine Kraftunterstützung für die Lenkung gewährleistet ist.

Fig. 2 zeigt das Zahnstangengehäuse 20 im Schnitt, wodurch auch innenliegende Komponenten erkennbar sind. Der hydraulische Bereich 32 weist endseitig einen Anschlagring 40 für den nicht gezeigten Kolben der Zahnstange und der mechanische Bereich 34 endseitig einen zusätzlichen Lagerring 42 für den anderen Endbereich der Zahnstange auf. Das Zahnstangengehäuse 20 ist im gezeigten Ausführungsbeispiel endseitig aufgeweitet und der Lagerring 42 formschlüssig eingesetzt. Er überträgt die durch die Zahnstange eingeleitete Druckkraft auf das Zahnstangengehäuse 20.

In etwa der Mitte des Zahnstangengehäuses 20 ist ein Stützring 38 erkennbar, durch das sich die Zahnstange hindurch erstreckt. Der Stützring 38 dient auch als Anschlag für den Kolben der Zahnstange. Sowohl an dem Stützring 38, als auch am Anschlagring 40 sind auf Seiten der Zylinderkammern Dichtungselemente 44 angeordnet.

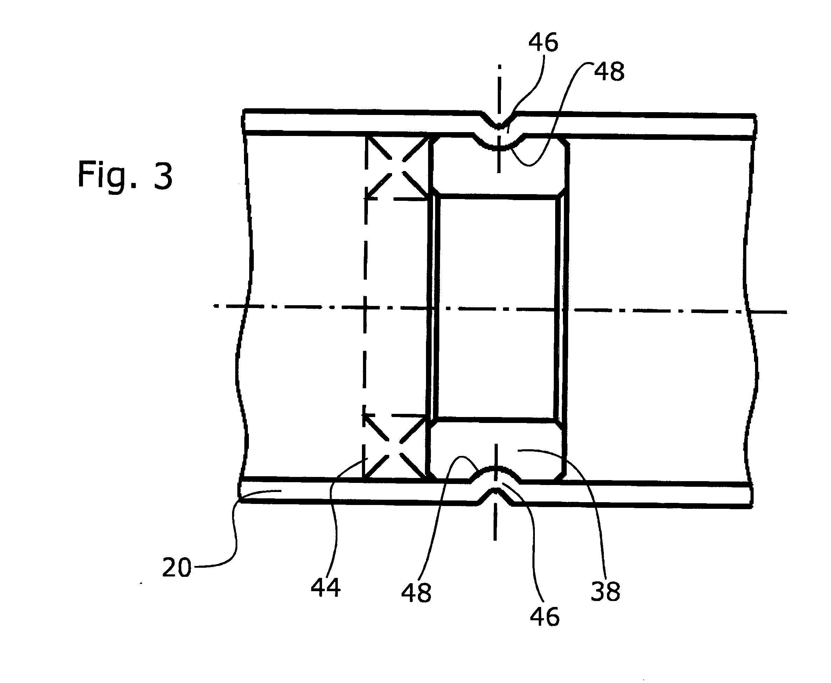

Fig. 3 verdeutlicht in einer Ausschnittsvergrößerung die Befestigung des Stützrings 38 im Zahnstangengehäuse 20. Erkennbar sind Querschnittsverengungen 46, ausgeführt als Nasen, die in das Innere des Zahnstangengehäuses 20 bis in Vertiefungen 48 in der Außenfläche des Stützrings 38 hineinragen. Die Querschnittsverengungen 46 können beispielsweise durch einen Stanzvorgang erzeugt werden, bei dem auch die Außenfläche des Stützrings 38 eingestanzt wird, es werden also in nur einem Arbeitsschritt sowohl die Querschnittsverengungen 46 bzw. Nasen, als auch die Vertiefungen 48 erzeugt.

Die Erfindung ermöglicht eine wesentliche Kosteneinsparung bei der Herstellung von Zahnstangengehäusen 20. Es ist nicht notwendig, dass gesamte Zahnstangengehäuse 20 mit einer durchgängigen Einschnürung zu versehen, vielmehr reicht bei der Herstellung ein schnell durchzuführender, einfacher Arbeitsschritt aus.

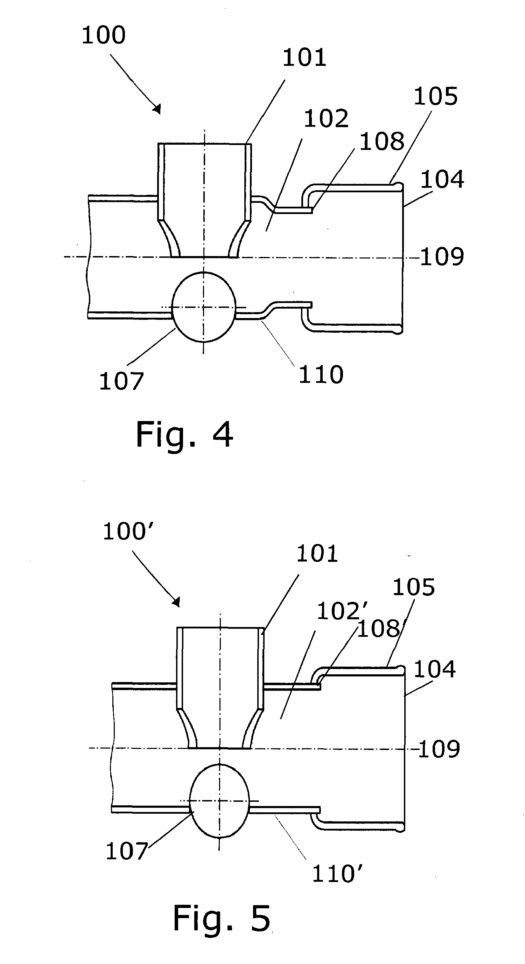

Die Figuren 4 bis 6 dienen der Veranschaulichung der nicht erfindungsgemäßen Anschlagausgestaltung bei einem Zahnstangengehäuse 100, 100', 100", wie sie auch bei dem in den Figuren 1 bis 3 gezeigten Zahnstangengehäuse 20 vorgesehen sein kann. Das Zahnstangengehäuse 100 weist einen geradlinigen zur Längsachse 109 symmetrischen, zylinderförmigen Durchbruch 102. Dieser definiert zwei Öffnungen, von denen in den Figuren 4 bis 6 lediglich die Öffnung 104 gezeigt ist. Innerhalb des Durchbruchs 102 des Zahnstangengehäuses 100 befindet sich im montierten Zustand der Lenkung eine nicht dargestellte Zahnstange. Im Bereich beider Öffnungen, also auch bei der gezeigten Öffnung 104 weist das Gehäuse tulpenförmige, im Tiefziehverfahren hergestellte Fortsätze 105, 106 aus Stahlblech auf, die auf das betreffende Stahlrohr 110 aufgeschweißt sind.

Wie in Fig. 4 deutlich zu erkennen ist, die eine Detailansicht des zum mechanischen Bereich benachbarten Endes des Zahnstangengehäuses 100 zeigt, weist das Stahlrohr 110 eine zur Längsachse 109 des Durchbruchs 102 symmetrische Querschnittsverringerung auf, so dass der Rand den Anschlag 108 bildet, an dem ein nicht dargestelltes Verbindungsgelenk zwischen Zahnstange und Spurstange anschlagen kann, um den Verschiebeweg der Zahnstange zu begrenzen. Somit wird der Anschlag 108 durch das Zahnstangengehäuse 100 ausgebildet.

In Fig. 5 ist eine dazu alternative Ausführungsform des Zahnstangengehäuses 100' gezeigt. Hier weist das Stahlrohr 110' einen solchen Querschnitt auf, dass der Rand, der sich durch die Querschnittsverringerung vom tulpenförmigen Fortsatz 105 zum Stahlrohr 110' ergibt als Anschlag 108' dient und somit dieser durch das Zahnstangengehäuse 100' ausgebildet ist.

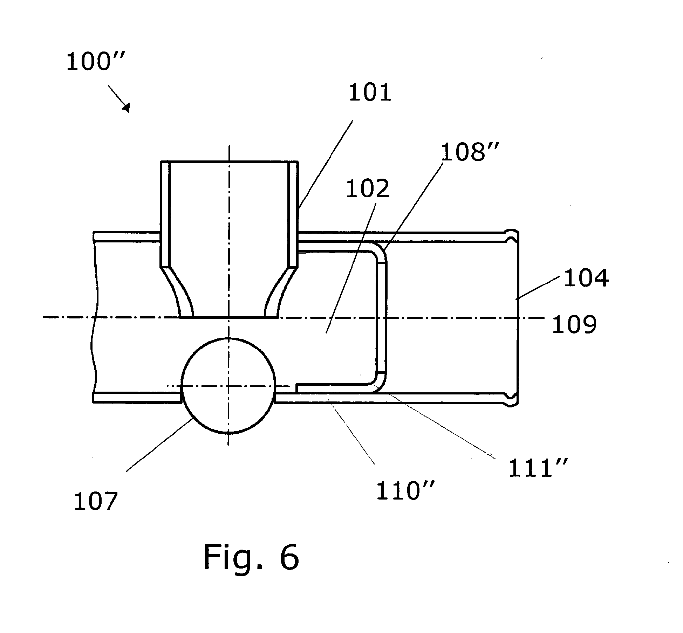

In Fig. 6 ist eine weiter alternative Ausführungsform des Zahnstangengehäuses 100" gezeigt, bei der der Anschlag 108" durch ein in den Durchbruch 102" eingesetztes Anschlagsteil 111" bereitgestellt wird. Das um die Längsachse 109 rotationssymmetrische Anschlagsteil 111" ist napfförmig und mit einem zentralen Durchgang für die Zahnstange ausgebildet und wird im Tiefziehverfahren aus Stahlblech hergestellt. Es ist in das Stahlrohr 110" eingepresst und der Rand um den zentralen Durchgang 102" bildet eine Querschnittsverringerung 108", die als Anschlagsstelle fungiert.

## Patentansprüche

1. Verfahren zur Befestigung eines Stützringes (38) in einem Zahnstangengehäuse (20, 100, 100', 100") für eine Servolenkung, welches eine Zahnstange rohrartig umgibt und mindestens einen hydraulischen Bereich (32) und einen mechanischen Bereich (34) aufweist, mit den Verfahrensschritten
a) Positionieren des Stützringes (38) an seiner Funktionsposition innerhalb des Zahnstangengehäuses (20, 100, 100', 100")
b) Erzeugen von Querschnittsverengungen (46) im Zahnstangengehäuse (20, 100, 100', 100") im Bereich des Stützringes (38) von außen derart, dass der Stützring (38) an seiner Funktionsposition fest gehalten ist
**dadurch gekennzeichnet, dass**
beim Schritt des Erzeugens der Querschnittsverengungen die Querschnittsverengungen (46) durch einen Stanzvorgang erzeugt werden, bei dem auch die Außenfläche des Stützringes eingestanzt wird.

2. Verfahren (20, 100, 100', 100") nach Anspruch 1, **dadurch gekennzeichnet, dass** die Querschnittsverengungen (46) einander diametral gegenüberliegend angeordnet sind.

3. Verfahren (20, 100, 100', 100") nach Anspruch 1, **dadurch gekennzeichnet, dass** mindestens drei Querschnittsverengungen (46) vorgesehen sind, die gleichmäßig über den Umfang des Zahnstangengehäuses (20, 100, 100', 100") verteilt angeordnet sind.

4. Verfahren (20, 100, 100', 100") nach einem der vorhergehenden Ansprüche, **dadurch gekennzeichnet, dass** die Querschnittsverengungen (46) durch Einstanzungen gebildet sind.

5. Verfahren nach einem der vorhergehenden Ansprüche, **dadurch gekennzeichnet, dass** die Querschnittsverengungen (46) den Stützring (38) durch Formschluss halten, indem sie in Vertiefungen auf einer Außenfläche des Stützrings (38) hineinreichen.

## Claims

1. A method for fastening a supporting ring (38) in a toothed rack housing (20, 100, 100', 100") for a power steering system, which housing surrounds a toothed rack in a tubular manner and has at least one hydraulic region (32) and one mechanical region (34), having the method steps
a) positioning the supporting ring (38) in its functional position inside the toothed rack housing (20, 100, 100', 100")
b) creating cross-sectionally narrowed portions (46) in the toothed rack housing (20, 100, 100', 100") in the region of the supporting ring (38) from the outside in such a manner that the supporting ring (38) is held fixedly in its functional position
**characterised in that**
in the step of creating the cross-sectionally narrowed portions, the cross-sectionally narrowed portions (46) are created by means of a stamping process, during which the outer face of the supporting ring is also stamped.

2. The method (20, 100, 100', 100") according to Claim 1,
**characterised in that**
the cross-sectionally narrowed portions (46) are arranged diametrically opposite each other.

3. The method (20, 100, 100', 100") according to Claim 1,
**characterised in that**
at least three cross-sectionally narrowed portions (46) are provided, which are distributed uniformly over the circumference of the toothed rack housing (20, 100, 100', 100").

4. The method (20, 100, 100', 100") according to one of the preceding claims,
**characterised in that**
the cross-sectionally narrowed portions (46) are formed by stamped portions.

5. The method according to one of the preceding claims,
**characterised in that**
the cross-sectionally narrowed portions (46) hold the supporting ring (38) by means of a form fit by extending into depressions on an outer face of the supporting ring (38).

## Revendications

1. Procédé de fixation d'un anneau de support (38) dans un boîtier de crémaillère (20,100,100',100") destiné à une direction assistée, qui entoure en forme de tube une crémaillère et présente au moins une zone hydraulique (32) et une zone mécanique (34), comportant les étapes de procédé consistant à :
a) positionner l'anneau de support (38) sur sa position fonctionnelle à l'intérieur du boîtier de crémaillère (20,100,100',100") ;
b) générer des rétrécissements de section transversale (46) dans le boîtier de crémaillère (20,100,100',100") au niveau de l'anneau de support (38) à partir de l'extérieur, de telle sorte que l'anneau de support (38) soit solidement maintenu dans sa position fonctionnelle ;
**caractérisé en ce que** lors de l'étape de génération des rétrécissements de section transversale, les rétrécissements de section transversale (46) sont générés par un processus de découpage, dans lequel la surface extérieure de l'anneau de support est aussi découpée.

2. Procédé (20,100,100',100") selon la revendication 1, **caractérisé en ce que** les rétrécissements de section transversale (46) sont diamétralement disposés en vis-à-vis les uns des autres.

3. Procédé (20,100,100',100") selon la revendication 1, **caractérisé en ce que** au moins trois rétrécissements de section transversale (46) sont prévues, qui sont réparties uniformément sur la circonférence du boîtier de crémaillère (20,100,100' ,100").

4. Procédé (20,100,100',100") selon une des revendications précédentes, **caractérisé en ce que** les rétrécissements de section transversale (46) sont formés par des découpes à l'emporte-pièce.

5. Procédé selon une des revendications précédentes, **caractérisé en ce que** els rétrécissements de section transversale (46) maintiennent l'anneau de support (38) par conjonction de forme, en s'enfonçant dans des cavités sur une surface extérieure de l'anneau de support (38).
